(19) **Europäisches Patentamt / European Patent Office / Office européen des brevets**

(11) **EP 4 636 121 A1**

(12) **EUROPEAN PATENT APPLICATION**
published in accordance with Art. 153(4) EPC

(43) Date of publication:
**22.10.2025  Bulletin 2025/43**

(21) Application number: **23903965.4**

(22) Date of filing: **12.12.2023**

(51) International Patent Classification (IPC):
**C23C 2/12** (2006.01)    **C22C 21/10** (2006.01)
**C21D 8/02** (2006.01)    **C22C 38/02** (2006.01)
**C22C 38/06** (2006.01)    **C22C 38/00** (2006.01)

(52) Cooperative Patent Classification (CPC):
**C21D 8/02; C22C 21/10; C22C 38/00; C22C 38/02; C22C 38/06; C23C 2/12**

(86) International application number:
**PCT/KR2023/020449**

(87) International publication number:
**WO 2024/128763 (20.06.2024 Gazette 2024/25)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **12.12.2022  KR 20220172689**

(71) Applicant: POSCO Co., Ltd
**Pohang-si, Gyeongsangbuk-do 37859 (KR)**

(72) Inventors:
- LEE, Kang-Min
**Gwangyang-si, Jeollanam-do 57807 (KR)**

- HWANG, Hyeon-Seok
**Gwangyang-si, Jeollanam-do 57807 (KR)**
- OH, Kkoch-Nim
**Gwangyang-si, Jeollanam-do 57807 (KR)**
- OH, Ji-Eun
**Gwangyang-si, Jeollanam-do 57807 (KR)**
- CHO, Yong-Kyun
**Seoul 06194 (KR)**

(74) Representative: **Meissner Bolte Partnerschaft mbB**
**Patentanwälte Rechtsanwälte**
**Postfach 86 06 24**
**81633 München (DE)**

(54) **PLATED STEEL SHEET AND METHOD FOR MANUFACTURING SAME**

(57)    The present invention relates to a plated steel sheet and a method for manufacturing same and, more specifically, to a plated steel sheet that is easy to bend and a method for manufacturing same.

[FIG. 1]

FERRITE LAYER

20 μm

## Description

Technical Field

The present disclosure relates to a plated steel sheet and a method for manufacturing the same, and more particularly, to a plated steel sheet having excellent bendability and a method for manufacturing the same.

Background Art

In recent years, automobile manufacturers have continuously been researching vehicle weight reductions to improve fuel efficiency and meet $CO_2$ emission regulations. Accordingly, various alloying elements are included to improve the strength of a steel material at the same weight, but problems such as increased hardenability and poor workability, with issues such as springback, are occurring.
To solve these problems, a hot press forming method has been proposed. The hot press forming method is a technology in which a steel material having a certain degree of strength is processed in an austenite single-phase region and then rapidly cooled to a low temperature to form a low-temperature structure such as martensite, or the like, in the steel material, thereby dramatically improving the strength of a product. Thereby, when a member having a high strength is formed, the problem of workability may be minimized.
Meanwhile, bendability is emerging as a representative physical property for evaluating crashworthiness of a member through the hot press forming method. However, it is known that bendability of the member through the hot press forming method is inferior due to the strength of the member itself and martensite, which is structurally vulnerable to bendability. To improve this, various methods are being attempted to improve the properties of the material, such as adding trace elements to the steel or controlling the structure during cold rolling annealing.

Summary of Invention

Technical Problem

An aspect of the present disclosure is to provide a plated steel sheet and a method for manufacturing the same.
An aspect of the present disclosure is to provide a plated steel sheet having excellent bendability and a method for manufacturing the same.
An object of the present disclosure is not limited to the above description. The object of the present disclosure will be understood from the entire content of the present specification, and a person skilled in the art to which the present disclosure pertains will understand an additional object of the present disclosure without difficulty.

Solution to Problem

According to an embodiment of the present disclosure, a plated steel sheet may be provided, the plated steel sheet including a base steel sheet; and

a plating layer formed on the base steel sheet including by weight%, 24.0 to 27.0% of Zn, 7.0 to 10.0% of Si, 6.0 to 10.0% of Fe, with a remainder of Al and inevitable impurities,
wherein the base steel sheet includes a ferrite layer formed in a thickness direction of the base steel sheet from an interface between the base steel sheet and the plating layer.

The plating layer may have an R value defined in the following Relational Expression 1 of 400.0 to 500.0.

[Relational Expression 1]

$$R = -1.21*[Al]-1.28*[Si]-1.98*[Fe]-3.17*[Zn]+631.86$$

in the Expression above, [Al], [Si], [Fe] and [Zn] are a weight % of each element.
When the plating layer is analyzed using a glow discharge optical emission spectrometer (GDS), an intersection point of Zn and Al may exist within a depth of 5 $\mu$m in a thickness direction from an outermost surface of the plating layer.
The ferrite layer may have a thickness of 70 to 80$\mu$m.
The plating layer may have an adhesion amount of 40 to 60g/m$^2$.
The plated steel sheet may have a hardness of 400 to 500 Hv.
The plated steel sheet may have a maximum bending angle of 70 degrees or more when subjected to a bending test after hot forming.

The base steel sheet may include, by weight %, 0.02 to 0.6% of C, 0.001 to 2% of Si, 0.001 to 1% of Al, 0.1 to 4% of Mn, 0.05% or less of P, 0.02% or less of S, 0.02% or less of N, 0.0001 to 0.01% of B, with a remainder of Fe and impurities.

The base steel sheet may further include, by weight %, at least one selected from the group consisting of, 0.1% or less of Ti, 1.00% or less of Cu, 1.00% or less of Mo, 1.00% or less of Cr, 1.00% or less of Ni, 1.00% or less of V, 0.01% or less of Ca, 0.1% or less of Nb, 1% or less of Sn, 1% or less of W, 1% or less of Sb, 0.1% or less of Mg, 1% or less of Co, 1% or less of As, 1% or less of Zr, 1% or less of Bi, and 0.3% or less of REM.

According to an embodiment of the present disclosure, a method for manufacturing a plated steel sheet may be provided, the method for manufacturing a plated steel sheet including: preparing a base steel sheet;

heating the prepared base steel sheet to a temperature within a range of 600 to 950°C and annealing the same at a dew point of 5 to 20°C; and
plating by immersing the annealed steel sheet in a plating bath including, by weight%, 26.0 to 30.0% of Zn, 6.0 to 9.0 of Si, with a remainder of Al and inevitable impurities.

The annealing operation may be maintained for 100 to 500 seconds in a gas atmosphere containing 70% or more of $H_2$ and a remainder of $N_2$.

A temperature of the plating bath may be 580 to 680°C.

Advantageous Effects of Invention

As set forth above, according to an embodiment of the present disclosure, a plated steel sheet and a method for manufacturing the same may be provided.

According to an embodiment of the present disclosure, a plated steel sheet having excellent bendability and a method for manufacturing the same may be provided.

Brief description of the Drawings

FIG. 1 is a photograph of a cross-section of Inventive Example 4 according to an embodiment of the present disclosure, observed in a thickness direction.
FIG. 2 is a photograph of Inventive Example 4 according to an embodiment of the present disclosure, measured using a glow discharge optical emission spectrometer (GDS) analysis method.

Best Mode for Invention

Hereinafter, preferred embodiments of the present disclosure will be described. Embodiments of the present disclosure may be modified in various forms, and the scope of the present disclosure should not be construed as being limited to the embodiments described below. The present embodiments are provided to those skilled in the art to further elaborate on the present disclosure.

The inventor of the present disclosure has confirmed that excellent bendability may be secured by appropriately forming a ferrite layer on a surface of a base steel sheet, and optimizing a composition of a plating layer in order to improve the above-described conventional problems, thereby completing the present disclosure.

Hereinafter, the present disclosure will be described in detail.

A plated steel sheet according to an embodiment of the present disclosure may include a base steel sheet; and a plating layer formed on the base steel sheet.

Base steel sheet

A base steel sheet according to an embodiment of the present disclosure is not particularly limited in terms of an alloy composition thereof. However, according to an embodiment of the present disclosure, the base steel sheet may include, by weight %, 0.02 to 0.6% of C, 0.001 to 2% of Si, 0.001 to 1% of Al, 0.1 to 4% of Mn, 0.05% or less of P, 0.02% or less of S, 0.02% or less of N, 0.0001 to 0.01% of B, with a remainder of Fe and impurities.

The base steel sheet of the present disclosure may include remaining iron (Fe) and unavoidable impurities in addition to the above-described composition. Since unavoidable impurities may be unintentionally incorporated in a common manufacturing process, the component may not be excluded. Since these impurities are known to any person skilled in the common manufacturing process, the entire contents thereof are not particularly mentioned in the present specification.

In addition, the base steel sheet according to an embodiment of the present disclosure may optionally further include by weight %, if necessary, at least one selected from the group consisting of 0.1% or less of Ti, 1.00% or less of Cu, 1.00% or less of Mo, 1.00% or less of Cr, 1.00% or less of Ni, 1.00% or less of V, 0.01% or less of Ca, 0.1% or less of Nb, 1% or less of Sn, 1% or less of W, 1% or less of Sb, 0.1% or less of Mg, 1% or less of Co, 1% or less of As, 1% or less of Zr, 1% or less of Bi, and 0.3% or less of REM.

According to an embodiment of the present disclosure, a base steel sheet may include a ferrite layer of 70 to 80 $\mu$m in a thickness direction of the base steel sheet from an interface between the base steel sheet and the plating layer.

In the present disclosure, in order to improve bendability, a ferrite layer may be formed in a depth direction of a thickness of the base steel sheet from an interface between the base steel sheet and the plating layer. The ferrite layer according to an embodiment of the present disclosure may have 90% or more of ferrite, by area %, and the remainder may include at least one of pearlite, bainite, and retained austenite. According to an embodiment of the present disclosure, ferrite may be included in an amount of 95% or more, by area %. The base steel sheet according to an embodiment of the present disclosure may have a microstructure formed of a two-phase comprising ferrite and pearlite, or microstructure formed of a three-phase comprising ferrite and pearlite, bainite, or retained austenite.

Normally, during hot press forming, martensite, which is a low-temperature structure, is mainly formed, and it may be difficult to have excellent bendability due to a high hardness of martensite. Therefore, in the present disclosure, by introducing ferrite, which is a soft phase, to a surface layer of the base steel sheet, even if martensite transformation occurs during hot press forming thereafter, the strength is not significantly deteriorated, as compared to a structure formed by a combination of two or more phases among ferrite, pearlite, bainite, or retained austenite, which are conventional matrix phases, and at the same time, bendability may be improved. In order to secure the above-described effect in the present disclosure, a thickness of the ferrite layer may be limited to 70 $\mu$m or more. However, if a region in which ferrite is formed to have a thickness exceeding 80 $\mu$m, strength deterioration may occur after hot forming, so an upper limit of the thickness thereof may be limited to 80 $\mu$m in order to secure bendability while maintaining strength.

Plating layer

A plated steel sheet according to an embodiment of the present disclosure may include a plating layer formed on the base steel sheet. The plating layer may include, by weight %, 24.0 to 27.0% of Zn, 7.0 to 10.0% of Si, 6.0 to 10.0% of Fe, with a remainder of Al, and inevitable impurities.

Zn in the plating layer may form an Al-Zn phase to secure sacrificial corrosion resistance. In order to secure the above-described effect, in the present disclosure, a Zn content may be 24.0 to 27.0%. If the Zn content is less than 24.0%, there is a concern that sacrificial corrosion resistance may be reduced. According to an embodiment of the present disclosure, the Zn content may be limited to 25.0% or more. On the other hand, if the Zn content of the plating layer exceeds 27.0%, there may be a problem of microcracks occurring. In an embodiment of the present disclosure, the Zn content may be included in an amount of 26.5% or less.

In addition, if a Si content of the plating layer is less than 7.0%, there may be a problem in that a thickness of $FeAl_3$ and $Fe_2Al_5$ intermetallic compounds may be excessively thick, causing a material to be easily broken. According to an embodiment of the present disclosure, the Si content may be limited to 7.5% or more. On the other hand, if the Si content exceeds 10.0%, an effect of reducing the thickness of the intermetallic compounds due to addition is reduced, and there may be a problem of Si precipitation. In an embodiment of the present disclosure, the Si content may be 10.0% or less. In an embodiment of the present disclosure, the Si content may be included in an amount of 9.5% or less.

Fe in the plating layer may be included from the base steel sheet by diffusion due to latent heat of a material after plating, and in the present disclosure, Fe may be included in an amount of 6.0 to 10.0%. The Fe in the plating layer forms an Fe-Al phase at an interface between the base steel sheet and the plating layer, thereby preventing direct contact between the Zn in the plating layer and the Fe of the base steel sheet, and has the effect of blocking microcracks by inhibiting the diffusion of Zn into the base steel sheet. If the Fe content of the plating layer is less than 6.0%, a plating surface may become rough and plating defects may increase due to the formation of an uneven Al-Fe alloy phase. According to an embodiment of the present disclosure, the Fe content may be limited to 7.0% or more. On the other hand, if the Fe content of the plating layer exceeds 10.0%, a brittle Al-Fe interfacial alloy layer is formed, which may cause a problem with the plating layer peeling off during material separation and processing. In an embodiment of the present disclosure, Fe may be included in an amount of 9.5% or less.

The plating layer according to an embodiment of the present disclosure may have an R value of 400.0 to 500.0 as defined in the following Relational Expression 1.

[Relational Expression 1]

$$R = -1.21*[Al]-1.28*[Si]-1.98*[Fe]-3.17*[Zn]+631.86$$

in the Expression above, [Al], [Si], [Fe], and [Zn] are a weight % of each element.

In the present disclosure, in order to confirm an effect of each component of a plating layer on a hardness (Hv), a relationship between a content of an element (weight %) of an overall cross-section of the plating layer and the hardness (Hv) value was derived. It was confirmed that when the R value defined in Relational Expression 1 above satisfies 400.0 to 500.0, the material can suppress the occurrence of microcracks during sacrificial corrosion resistance and hot forming.

When the R value defined in Relational Expression 1 above is less than 400.0, the effect of sacrificial corrosion resistance described above may be insufficient. In an embodiment of the present disclosure, the R value may be 410.0 or more. On the other hand, if the R value exceeds 500.0, a Zn superphase may be formed at the surface layer during hot forming, and Zn oxides may be excessively generated. In addition, there may be a problem of microcracks occurring during hot forming. In an embodiment of the present disclosure, the R value may be 480.0 or less. In an embodiment of the present disclosure, the R value may be 460.0 or less.

According to an embodiment of the present disclosure, when a plating layer is analyzed using a glow discharge optical emission spectrometer (GDS), an intersection point of Zn and Al may exist within a depth of 5.0 $\mu$m in a thickness direction from an outermost surface of the plating layer.

In the present disclosure, in order to provide sacrificial corrosion resistance to a material and prevent the occurrence of microcracks during hot forming, a position of the intersection point of Zn and Al in the plating layer may be limited. When the position of the intersection point exceeds a depth of 5.0 $\mu$m in the thickness direction from the outermost surface of the plating layer, there may be a problem that a Zn superphase is formed on the surface layer during hot forming, and Zn oxides are excessively generated.

The plating layer according to an embodiment of the present disclosure may have an adhesion amount of 40 to 60 g/m$^2$.

If the adhesion amount of the plating layer is less than 40 g/m$^2$, a problem in use such as poor corrosion resistance may occur due to excessive Fe diffusion after hot forming.

On the other hand, if the adhesion amount of the plating layer exceeds 60 g/m$^2$, an amount of aluminum in the plating layer relatively increases, which may lead to a problem of poor bendability. A plated steel sheet according to an embodiment of the present disclosure may have a hardness of a plating layer of 400 to 500 Hv, and a maximum bending angle of 70 degrees or more in a bending test after hot forming, thereby ensuring properties such as excellent strength and bendability.

In the present disclosure, the bendability evaluation was conducted with a direction parallel to a rolling direction as a bending test axis direction, and a maximum angle at which no cracks were formed was measured.

Hereinafter, a method for manufacturing a plated steel sheet of the present disclosure is described in detail.

A plated steel sheet according to an embodiment of the present disclosure may be manufactured by preparing, annealing, and plating a base steel sheet satisfying an alloy composition of the present disclosure.

Preparation of a base steel sheet

A base steel sheet satisfying an alloy composition according to an embodiment of the present disclosure may be prepared. The base steel sheet according to an embodiment of the present disclosure is not particularly limited in the alloy composition, but it is more preferable to satisfy the composition proposed in the present disclosure. The composition of the base steel sheet may be applied in the same manner as described above.

Annealing

The prepared steel sheet may be heated to a temperature within a range of 600 to 950°C and annealed for 100 to 500 seconds.

In the present disclosure, during annealing, an internal oxidation method is applied to form a ferrite layer through a decarburization reaction within the steel sheet, thereby improving bendability.

During annealing, if a heating temperature is lower than 600°C, material deformation and warping due to work hardening may occur when continuously passing through rolls of a continuous process line. On the other hand, if the heating temperature exceeds 950°C, the surface concentration of oxidizing elements such as Mn, Si, and Cr present in the base steel sheet and the formation of oxides may cause the plating properties to deteriorate.

When an annealing time is less than 100 seconds, there may be a problem that a final strength obtained after hot forming may be reduced. On the other hand, when the annealing time exceeds 500 seconds, austenite may be coarsened, making it difficult to obtain steel with finely dispersed martensite after hot forming.

According to an embodiment of the present disclosure, during annealing, a dew point temperature is 5 to 20°C, and annealing may be performed in a gas atmosphere including 70% or more of $H_2$ and a remainder of $N_2$.

A ferrite layer may be formed by introducing moist nitrogen into an annealing furnace. The ferrite layer may be formed due to the decomposition of cementite and carbide, which is accompanied by a reaction in which water vapor contained in moist nitrogen dissociates into O atoms at a surface layer of the steel, reacts with carbon in the steel, and decarburizes into carbon monoxide (CO). Meanwhile, a small amount of $H_2O$ may inevitably be included in the gas atmosphere.

If the dew point temperature is lower than 5°C, a level of the formation of the ferrite layer is insignificant, and there may be a problem in forming an optimal ferrite layer in a short period of time for industrial purposes. On the other hand, if the dew point temperature exceeds 20°C, there may be a problem of corrosion and aging of the equipment.

Plating

The annealed base steel sheet may be plated by immersing the same in a plating bath including, by weight %, 26.0 to 30.0% of Zn, 6.0 to 9.0% of Si, with a remainder of Al and inevitable impurities.

In the present disclosure, as described above, a composition of the plating bath may be controlled during plating, so that the plating layer includes, by weight %, 24.0 to 27.0% of Zn, 7.0 to 10.0% of Si, with a remainder of Al and inevitable impurities.

Zn in the plating layer may secure sacrificial corrosion resistance by forming an Al-Zn phase. In order to secure such an effect, a Zn content of the plating bath in the present disclosure may be included in an amount of 26.0 to 30.0%. If the Zn content of the plating bath is less than 26.0%, the Zn content in the plating layer will not reach the desired level, and as a result, there is a concern that sacrificial corrosion resistance may be reduced. According to an embodiment of the present disclosure, the Zn content may be limited to 26.5% or more. On the other hand, if the Zn content of the plating bath exceeds 30.0%, there is a concern that the Zn content range of the plating layer may be exceeded, and as a result, there may be a problem of microcracks occurring. In an embodiment of the present disclosure, the Zn content may be included in an amount of 29.5% or less.

In addition, during manufacturing, an Si content of the plating bath may be limited to 6.0 to 9.0% to suppress the diffusion of Al. The Si content of the plating bath affects a Si solid solution phase, so it may be a smaller weight % value compared to the Si content of the target plating layer. If the Si content is less than 6.0%, there is a concern that a composition range of the plating layer proposed in the present disclosure may be exceeded, and a temperature of molten metal may be high, so that a thickness of $FeAl_3$ and $Fe_2Al_5$ intermetallic compounds may become excessively thick, causing a problem in that the material may be easily broken. According to an embodiment of the present disclosure, the Si content may be limited to 6.5% or more. On the other hand, if the Si content exceeds 9.0%, there is a concern that the composition range suggested by the plating layer may be exceeded as described above. In addition, an effect of reducing the thickness of the intermetallic compound due to the addition is reduced, and there may be a problem of Si precipitation. In an embodiment of the present disclosure, the Si content may be included in an amount of 8.5% or less.

A temperature of the plating bath according to an embodiment of the present disclosure may be 580 to 680°C.

Since diffusion gradients of Al, Zn, Si in the plating bath and Fe in the base steel sheet may be determined by the temperature of the plating bath, the temperature within a range of the plating bath in the present disclosure may be limited to 580 to 680°C.

When the temperature of the plating bath is lower than 580°C, Fe diffusion in the base steel sheet may be insufficient, and there may be a concern of Al and Si precipitation. In an embodiment of the present disclosure, the temperature may be 600°C or higher. Moreover, in an embodiment of the present disclosure, the temperature may be 620°C or higher. On the other hand, if the temperature exceeds 680°C, there may be a problem of reduced productivity due to production being stopped and sink rolls being replaced due to vibrations caused by rapid reduction in a lifespan of related parts such as sleeves and bushes supporting sink rolls used in the plating bath.

According to an embodiment of the present disclosure, an adhesion amount during plating may be 40 to 60 g/m$^2$.

When the adhesion amount is less than 40 g/m$^2$ during plating, a problem in use such as poor corrosion resistance may occur due to excessive diffusion of Fe after hot forming. On the other hand, during plating, if the adhesion amount exceeds 60 g/m$^2$, an amount of aluminum in the plating layer increases relatively, which may cause a problem such as poor bendability.

Skin pass milling

The plated steel sheet may be subjected to skin pass milling by applying 200 to 500 tons of pressure thereto.

In the present disclosure, an additional skin pass milling operation may be further included as needed, and in particular, skin pass milling may be performed by applying 200 to 500 tons to provide surface roughness and improve surface appearance.

Mode for Invention

Hereinafter, the present disclosure will be specifically described through the following Examples. However, it should be noted that the following Examples are only for describing the present disclosure in detail by illustration, and are not intended to limit the right scope of the present disclosure.

(Example)

A base steel sheet including by weight %, 0.23% of C, 0.25% of Si, 1.3% of Mn, 0.002% of B, 0.03% of Ti, 0.15% of Cr, with a remainder of Fe was prepared, and then annealed and plated under the conditions of Table 1 below to manufacture a plated steel sheet. Plating was performed using a composition of a plating bath in Table 1, and the composition of the plating bath includes inevitable impurities in addition to the disclosed Zn, Si, and Al.

[Table 1]

| Specimen Nos. | Annealing | | | | Plating | | | | | |
|---|---|---|---|---|---|---|---|---|---|---|
| | Temperature (°C) | Time (sec.) | Dew point temperature (°C) | Gas | Composition of plating bath (weight %) | | | Temperature of plating bath (°C) | Adhesion amount (g/m²) |
| | | | | | Zn | Si | Al | | |
| 1 | 850 | 441 | -50 | 95.00%H$_2$ 5.00%N$_2$ | 35.3 | 0 | 63.5 | 583 | 59 |
| 2 | 791 | 465 | -51 | | 56.1 | 8.7 | 33.4 | 601 | 54 |
| 3 | 782 | 368 | -48 | | 9.1 | 8.1 | 81.3 | 620 | 48 |
| 4 | 776 | 402 | -47 | | 22.2 | 0 | 76.5 | 630 | 52 |
| 5 | 776 | 491 | 5 | 95.00%H$_2$ 4.99%N$_2$ 0.01%H$_2$O | 26.5 | 6.3 | 66.3 | 635 | 55 |
| 6 | 789 | 491 | 12 | | 27.8 | 7.0 | 64.2 | 630 | 50 |
| 7 | 777 | 442 | 15 | 95.00%H$_2$ 4.90%N$_2$ 0.100%H$_2$O | 28.7 | 7.1 | 63.0 | 631 | 47 |
| 8 | 784 | 442 | 19 | | 29.8 | 8.6 | 60.5 | 638 | 46 |

Table 2 below showed microstructural characteristics and physical properties of the manufactured plated steel sheet. First, in order to confirm a thickness of a ferrite layer in a depth region of the base steel sheet in a thickness direction from an interface between the base steel sheet and the plating layer, a microstructure was observed using an optical microscope after 2-3% nital etching. Table 2 below showed the thickness of the ferrite layer measured using the method described above. All examples included 90% or more of ferrite, and at least one of pearlite, bainite, or retained austenite was observed as other structures.

In addition, for the manufactured plated steel sheet, after dissolving the plated steel sheet with a NaOH solution for 10 minutes, a plating layer was dissolved for 30 minutes using an HCl solution and an inhibitor, and the two dissolved solutions were combined to measure contents of the Al, Zn, Si, and Fe components of the plating layer through ICP-OES (Inductively Coupled Plasma Optical Emission Spectroscopy). Based on the measured contents of components, a value of Relational Expression 1 was also calculated and described. In addition, a position of an intersection point of Zn and Al was measured and described using the GDS analysis method.

In terms of physical properties, a hardness value (Hv) of the plating layer was measured using a Vickers hardness tester with a force of 50 mN (5 g)/10 s after shearing the plated steel sheet, standing the plated steel sheet up vertically, mounting the plated steel sheet with resin, and polishing the same.

In addition, after collecting a specimen of the plated steel sheet manufactured by the above-mentioned method, the specimen was cut into a blank of a certain size, and maintained in a furnace at a temperature of 900°C after the blank specimen reached 900°C. Thereafter, the heated blank specimen was transferred to a mold within 20 seconds, and then hot formed using the mold. Then, the specimen was cooled at a cooling rate of 20°C/s to obtain a hot-formed member. A 35w x 100mm² sample was collected from the heat-treated plated steel sheet and a three-point bending test was performed. The bendability evaluation was conducted by measuring a maximum angle at which no cracks are formed in a direction parallel to a rolling direction as a bending test axis. When the size is less than 50 degrees, it was indicated as '1,' when the size is 50 degrees or more but less than 60 degrees, it was indicated as '2,' when the size is 60 degrees or more but less than 70 degrees, it was indicated as '3,' when the size is 70 degrees or more but less than 80 degrees, it was indicated as '4,' and when the size is 80 degrees or more but less than 90 degrees, it was indicated as '5.'

[Table 2]

| Spe cim en Nos . | Microstructur e | Plating layer | | | | | | Physical properties | | Division |
|---|---|---|---|---|---|---|---|---|---|---|
| | Thickness of ferrite layer (μm) | Composition (weight %) | | | | Relati onal Expres sion 1 | Position of intersection point of Zn and Al from outermost surface (μm) | Hard ness (Hv) | benda bility | |
| | | Zn | Si | Al | Fe | | | | | |
| 1 | 0 | 32.1 | 0 | 67.9 | 0 | 448.9 | 5.3 | 414 | 2 | Compa rativ e Examp le 1 |
| 2 | 0 | 51.0 | 8.7 | 33.0 | 7.3 | 398.8 | 7.1 | 391 | 2 | Compa rativ e Examp le 2 |
| 3 | 0 | 8.3 | 0 | 82.1 | 0.8 | 500.2 | 9.8 | 508 | 3 | Compa rativ e Examp le 3 |
| 4 | 0 | 20.2 | 0 | 79.0 | 0.8 | 474.2 | 3.2 | 484 | 3 | Compa rativ e Examp le 4 |
| 5 | 70 | 24.1 | 8.0 | 61.9 | 6.0 | 459.5 | 4.4 | 443 | 4 | Inven tive Examp le 1 |
| 6 | 72 | 25.3 | 7.5 | 57.3 | 9.9 | 452.3 | 2.5 | 430 | 5 | Inven tive Examp le 2 |
| 7 | 75 | 26.1 | 8.3 | 58.1 | 7.5 | 453.3 | 2.7 | 445 | 5 | Inven tive Examp le 3 |
| 8 | 78 | 27.0 | 9.8 | 56.8 | 6.3 | 452.5 | 3.4 | 466 | 5 | Inven tive Examp le 4 |

[Relational Expression 1]

$$R = -1.21*[Al]-1.28*[Si]-1.98*[Fe]-3.17*[Zn]+631.86$$

in the Expression, [Al], [Si], [Fe], and [Zn] are a weight % of each element.

As shown in Table 2, in the case of Inventive Examples satisfying the conditions of the present disclosure, the microstructure characteristics proposed in the present disclosure were satisfied, and the physical properties targeted by the present disclosure were also secured.

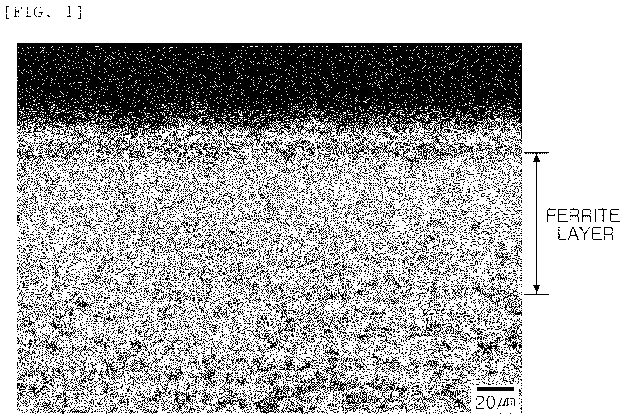

FIG. 1 is a photograph of a cross-section of Inventive Example 4 according to an embodiment of the present disclosure, observed in a thickness direction. A thickness of a ferrite layer may be confirmed by observing a microstructure after nital etching, and as shown in FIG.1, the thickness was formed to be 78 μm.

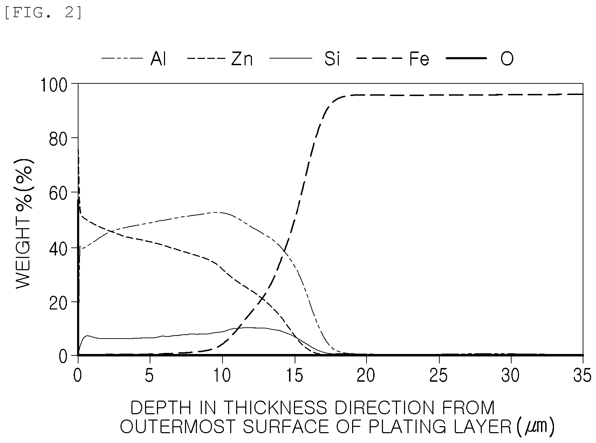

FIG. 2 is a photograph of Inventive Example 4 according to an embodiment of the present disclosure, measured by the GDS analysis method. The distribution of major elements such as Al, Zn, Si, Fe, and O in a thickness direction of a steel sheet may be confirmed, and as shown in FIG. 2, an intersection point of Zn and Al existed at a depth of 3.4 μm in the thickness direction from an outermost surface of the plating layer.

On the other hand, Comparative Examples are cases which are out of the annealing conditions and plating bath compositions proposed in the present disclosure, and it can be confirmed that the target plating layer of the present disclosure could not be manufactured, and the physical properties were also inferior. In particular, in Comparative Examples 1 to 3, the intersection point of Zn and Al in the plating layer exceeded 5 μm, so that a Zn superphase and a Zn oxide were excessively formed at the surface layer.

While example embodiments have been illustrated and described above, it will be apparent to those skilled in the art that modifications and variations could be made without departing from the scope of the present disclosure as defined by the appended claims.

**Claims**

1.  A plated steel sheet, comprising:

    a base steel sheet; and
    a plating layer formed on the base steel sheet comprising by weight%, 24.0 to 27.0% of Zn, 7.0 to 10.0% of Si, 6.0 to 10.0% of Fe, with a remainder of Al and inevitable impurities,
    wherein the base steel sheet comprises a ferrite layer formed in a thickness direction of the base steel sheet from an interface between the base steel sheet and the plating layer.

2.  The plated steel sheet of claim 1, wherein the plating layer has an R value of 400.0 to 500.0 as defined in the following Relational Expression 1,

    [Relational Expression 1]

    $$R = -1.21*[Al]-1.28*[Si]-1.98*[Fe]-3.17*[Zn]+631.86$$

    where [Al], [Si], [Fe], and [Zn] are a weight % of each element.

3.  The plated steel sheet of claim 1, wherein, when the plating layer is analyzed using a glow discharge optical emission spectrometer (GDS), an intersection point of Zn and Al exists within a depth of 5.0 μm in a thickness direction, from an outermost surface of the plating layer.

4.  The plated steel sheet of claim 1, wherein the ferrite layer has a thickness of 70 to 80 μm.

5.  The plated steel sheet of claim 1, wherein the plating layer has an adhesion amount of 40 to 60 g/m$^2$.

6.  The plated steel sheet of claim 1, wherein the plated steel sheet has a hardness of 400 to 500 Hv.

7.  The plated steel sheet of claim 1, wherein the plated steel sheet has a maximum bending angle of 70 degrees or more, when subjected to a bending test after hot forming.

8.  The plated steel sheet of claim 1, wherein the base steel sheet comprises, by weight%, 0.02 to 0.6% of C, 0.001 to 2% of Si, 0.001 to 1% of Al, 0.1 to 4% of Mn, 0.05% or less of P, 0.02% or less of S, 0.02% or less of N, 0.0001 to 0.01% of B, with a remainder of Fe and impurities.

9.  The plated steel sheet of claim 8, wherein the base steel sheet further comprises, by weight %, at least one selected from the group consisting of 0.1% or less of Ti, 1.00% or less of Cu, 1.00% or less of Mo, 1.00% or less of Cr, 1.00% or less of Ni, 1.00% or less of V, 0.01% or less of Ca, 0.1% or less of Nb, 1% or less of Sn, 1% or less of W, 1% or less of Sb, 0.1% or less of Mg, 1% or less of Co, 1% or less of As, 1% or less of Zr, 1% or less of Bi, and 0.3% or less of REM.

10. A method for manufacturing a plated steel sheet, comprising:

    preparing a base steel sheet;
    heating the prepared base steel sheet to a temperature within a range of 600 to 950°C and annealing the same at a dew point of 5 to 20°C; and
    plating by immersing the annealed steel sheet in a plating bath comprising, by weight%, 26.0 to 30.0% of Zn, 6.0 to 9.0 of Si, with a remainder of Al and inevitable impurities.

11. The method for manufacturing a plated steel sheet of claim 10, wherein the annealing operation is maintained for 100 to 500 seconds in a gas atmosphere comprising 70% or more of $H_2$ and a remainder of $N_2$.

12. The method for manufacturing a plated steel sheet of claim 10, wherein a temperature of the plating bath is 580 to 680°C.

[FIG. 1]

FERRITE
LAYER

20 μm

[FIG. 2]

DEPTH IN THICKNESS DIRECTION FROM
OUTERMOST SURFACE OF PLATING LAYER ($\mu$m)

## INTERNATIONAL SEARCH REPORT

| International application No. |
|---|
| **PCT/KR2023/020449** |

| A. | CLASSIFICATION OF SUBJECT MATTER |
|---|---|

**C23C 2/12**(2006.01)i; **C22C 21/10**(2006.01)i; **C21D 8/02**(2006.01)i; **C22C 38/02**(2006.01)i; **C22C 38/06**(2006.01)i; **C22C 38/00**(2006.01)i

According to International Patent Classification (IPC) or to both national classification and IPC

| B. | FIELDS SEARCHED |
|---|---|

Minimum documentation searched (classification system followed by classification symbols)

C23C 2/12(2006.01); B21D 22/00(2006.01); C21D 9/46(2006.01); C22C 21/10(2006.01); C22C 38/00(2006.01); C22C 38/38(2006.01); C22C 38/60(2006.01); C23C 2/04(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 도금(plating), 페라이트(ferrite), 아연(zinc), 철(iron), 열처리(heat treatment)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | KR 10-2022-0089439 A (POSCO) 28 June 2022 (2022-06-28)<br>See paragraphs [0055]-[0064], [0079], [0092] and [0103]-[0106], tables 1-2 and figure 1. | 1-12 |
| Y | KR 10-2020-0076773 A (POSCO) 30 June 2020 (2020-06-30)<br>See paragraphs [0016], [0018], [0021], [0061] and [0080]-[0081] and table 4. | 1-12 |
| A | US 2018-0223386 A1 (ARCELORMITTAL) 09 August 2018 (2018-08-09)<br>See claim 32 and tables 1-2. | 1-12 |
| A | JP 2021-152217 A (ARCELORMITTAL) 30 September 2021 (2021-09-30)<br>See paragraphs [0013]-[0015] and table 2. | 1-12 |
| A | KR 10-2015-0074882 A (POSCO) 02 July 2015 (2015-07-02)<br>See claims 6-8 and table 1. | 1-12 |

☐ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **07 March 2024** | **07 March 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/020449**

| Patent document cited in search report | | | Publication date (day/month/year) | Patent family member(s) | | | Publication date (day/month/year) |
|---|---|---|---|---|---|---|---|
| KR | 10-2022-0089439 | A | 28 June 2022 | KR | 10-2501440 | B1 | 20 February 2023 |
| KR | 10-2020-0076773 | A | 30 June 2020 | CN | 113195774 | A | 30 July 2021 |
| | | | | CN | 113195774 | B | 20 June 2023 |
| | | | | CN | 116555668 | A | 08 August 2023 |
| | | | | EP | 3901315 | A1 | 27 October 2021 |
| | | | | JP | 2022-513264 | A | 07 February 2022 |
| | | | | JP | 2023-100953 | A | 19 July 2023 |
| | | | | JP | 7280364 | B2 | 23 May 2023 |
| | | | | KR | 10-2165223 | B1 | 13 October 2020 |
| | | | | MX | 2021006813 | A | 02 July 2021 |
| | | | | US | 2022-0025479 | A1 | 27 January 2022 |
| | | | | WO | 2020-130666 | A1 | 25 June 2020 |
| US | 2018-0223386 | A1 | 09 August 2018 | BR | 112018000450 | A2 | 11 September 2018 |
| | | | | BR | 112018000450 | B1 | 22 February 2022 |
| | | | | CA | 2991548 | A1 | 02 February 2017 |
| | | | | CA | 2991548 | C | 04 May 2021 |
| | | | | CN | 107849628 | A | 27 March 2018 |
| | | | | CN | 107849628 | B | 22 September 2020 |
| | | | | EP | 3329021 | A1 | 06 June 2018 |
| | | | | EP | 3329021 | B1 | 23 February 2022 |
| | | | | EP | 4006178 | A1 | 01 June 2022 |
| | | | | ES | 2909307 | T3 | 06 May 2022 |
| | | | | HU | E058024 | T2 | 28 June 2022 |
| | | | | JP | 2018-527462 | A | 20 September 2018 |
| | | | | JP | 6630431 | B2 | 15 January 2020 |
| | | | | KR | 10-2018-0022874 | A | 06 March 2018 |
| | | | | KR | 10-2075278 | B1 | 07 February 2020 |
| | | | | MA | 42520 | A | 06 June 2018 |
| | | | | MA | 42520 | B1 | 28 February 2022 |
| | | | | MX | 2018001308 | A | 30 April 2018 |
| | | | | PL | 3329021 | T3 | 16 May 2022 |
| | | | | RU | 2685617 | C1 | 22 April 2019 |
| | | | | UA | 119821 | C2 | 12 August 2019 |
| | | | | US | 11162153 | B2 | 02 November 2021 |
| | | | | US | 2021-0395853 | A1 | 23 December 2021 |
| | | | | US | 2021-0395854 | A1 | 23 December 2021 |
| | | | | US | 2021-0395855 | A1 | 23 December 2021 |
| | | | | US | 2021-0395856 | A1 | 23 December 2021 |
| | | | | WO | 2017-017484 | A1 | 02 February 2017 |
| | | | | WO | 2017-017514 | A1 | 02 February 2017 |
| JP | 2021-152217 | A | 30 September 2021 | BR | 112019009708 | A2 | 13 August 2019 |
| | | | | BR | 122023000524 | B1 | 10 October 2023 |
| | | | | CA | 3044772 | A1 | 31 May 2018 |
| | | | | CA | 3044772 | C | 19 July 2022 |
| | | | | CA | 3156200 | A1 | 31 May 2018 |
| | | | | CA | 3156200 | C | 02 January 2024 |
| | | | | CA | 3156703 | A1 | 31 May 2018 |
| | | | | CA | 3156703 | C | 17 October 2023 |
| | | | | CA | 3217629 | A1 | 31 May 2018 |
| | | | | CN | 109982839 | A | 05 July 2019 |

Form PCT/ISA/210 (patent family annex) (July 2022)

INTERNATIONAL SEARCH REPORT
Information on patent family members

International application No.

**PCT/KR2023/020449**

| Patent document cited in search report | Publication date (day/month/year) | Patent family member(s) | | | Publication date (day/month/year) |
|---|---|---|---|---|---|
| | | CN | 109982839 | B | 19 March 2021 |
| | | CN | 113046633 | A | 29 June 2021 |
| | | CN | 113046633 | B | 02 August 2022 |
| | | CN | 113046645 | A | 29 June 2021 |
| | | CN | 113046645 | B | 27 September 2022 |
| | | EP | 3544808 | A1 | 02 October 2019 |
| | | EP | 3544808 | B1 | 14 April 2021 |
| | | EP | 3656552 | A1 | 27 May 2020 |
| | | EP | 3656552 | B1 | 21 July 2021 |
| | | EP | 3656888 | A1 | 27 May 2020 |
| | | EP | 3656888 | B1 | 21 July 2021 |
| | | EP | 3901321 | A1 | 27 October 2021 |
| | | ES | 2868828 | T3 | 22 October 2021 |
| | | ES | 2886340 | T3 | 17 December 2021 |
| | | ES | 2903368 | T3 | 01 April 2022 |
| | | HU | E055027 | T2 | 28 October 2021 |
| | | HU | E056344 | T2 | 28 February 2022 |
| | | HU | E056759 | T2 | 28 March 2022 |
| | | JP | 2020-509160 | A | 26 March 2020 |
| | | JP | 2022-169693 | A | 09 November 2022 |
| | | JP | 6998955 | B2 | 18 January 2022 |
| | | JP | 7130816 | B2 | 05 September 2022 |
| | | KR | 10-2019-0073462 | A | 26 June 2019 |
| | | KR | 10-2021-0074405 | A | 21 June 2021 |
| | | KR | 10-2272870 | B1 | 06 July 2021 |
| | | KR | 10-2308581 | B1 | 05 October 2021 |
| | | MA | 46875 | A | 02 October 2019 |
| | | MA | 46875 | B1 | 30 April 2021 |
| | | MA | 49658 | A | 24 March 2021 |
| | | MA | 49658 | B1 | 31 August 2021 |
| | | MA | 49659 | A | 31 March 2021 |
| | | MA | 49659 | B1 | 30 September 2021 |
| | | MA | 54573 | A | 27 October 2021 |
| | | MX | 2019006106 | A | 21 August 2019 |
| | | PL | 3544808 | T3 | 04 October 2021 |
| | | PL | 3656552 | T3 | 20 December 2021 |
| | | PL | 3656888 | T3 | 13 December 2021 |
| | | RU | 2726165 | C1 | 09 July 2020 |
| | | UA | 124973 | C2 | 22 December 2021 |
| | | UA | 127366 | C2 | 26 July 2023 |
| | | UA | 127668 | C2 | 22 November 2023 |
| | | UA | 127669 | C2 | 22 November 2023 |
| | | US | 2020-0224297 | A1 | 16 July 2020 |
| | | US | 2023-0167557 | A1 | 01 June 2023 |
| | | WO | 2018-096387 | A1 | 31 May 2018 |
| | | WO | 2018-096487 | A1 | 31 May 2018 |
| | | ZA | 201903061 | B | 29 January 2020 |
| KR 10-2015-0074882 A | 02 July 2015 | KR | 10-1639843 | B1 | 14 July 2016 |

Form PCT/ISA/210 (patent family annex) (July 2022)